# EUROPEAN PATENT APPLICATION

(11) **EP 1 956 768 A1**
(43) Date of publication of application: **13.08.2008**
(21) Application number: 07123603.8
(22) Date of filing: 19.12.2007
(51) Int. Cl.: H04L 12/56

(54) **Apparatus and method of controlling ad hoc network route**

(30) Priority: 07.02.2007 JP 2007027553
(71) Applicant: Fujitsu Ltd., Kawasaki-shi, Kanagawa 211-8588 (JP)
(72) Inventor: Nakano, Hiroyuki, Kawasaki-shi, Kanagawa 211-8588 (JP)
(74) Representative: Fenlon, Christine Lesley

(57) **Abstract**

In an ad hoc network formed by a plurality of nodes (0 through 7, 1301 through 1305, 1501, 1511, 1512, 1521 through 1523), a process of transmitting a request to a plurality of adjacent nodes is repeated in a forward flooding process from a source node to a destination node, and information about a route including an adjacent node is registered in a node that has received a request from the adjacent node. A process of transmitting a reply to a plurality of adjacent nodes is repeated in an inverse flooding process from the destination node to the source node, and information about a route including an adjacent node is registered in a node that has received a reply from the adjacent node.

## Description

### Background of the Invention

### Field of the Invention

The present invention relates to an apparatus and a method of controlling the route of an ad hoc network configured by node devices such as terminals etc. that can be connected by wireless.

### Description of the Related Art

There are some types of route control protocols by usage for an ad hoc network. Among these protocols, an AODV (ad hoc on-demand distance vector) protocol belongs to a reactive type system, and establishes a communication route on demand (for example, refer to the non-patent document 1). In the reactive system, when each node receives a communication request, a routing table is generated by checking nodes around.

With the conventional AODV protocol, when a route from a source to a destination is searched for, a route request passes all possible paths in a flooding process. When the route request reaches the destination, a reply is returned through the most preferable route.

Each node forming part of an ad hoc network holds information about a destination address, a next hop address, a hop count, etc. in almost the same format as the routing table etc. used in the conventional cable system. When a packet is forwarded, the routing table is searched. If an entry matching the destination of the packet is detected, then the packet is forwarded toward the next hop of the entry. In the following description, the address of each node recorded in the routing table is replaced with a node identifier (node number) for simplicity.

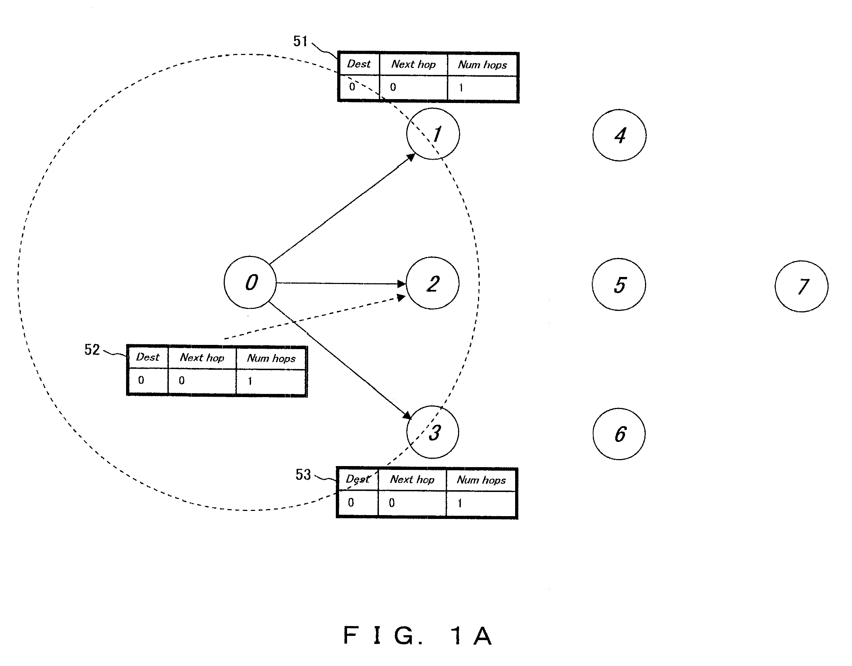

FIGS. 1A through 1C show examples of the flooding process in the conventional ad hoc network. The ad hoc network shown in FIG. 1A is formed by eight nodes, that is, nodes 0 through 7, and the node 0 and the node 7 are respectively the source and the destination. Each node corresponds to a personal computer, a PDA (personal digital assistant), a terminal of a mobile telephone etc., and other communication devices.

First, as shown in FIG. 1A, the source node 0 transmits a route request packet to adjacent nodes 1 through 3 with the node 7 set as a destination. The nodes 1 through 3 respectively generate routing tables 51 through 53 made of an entry including a destination (Dest), a next hop (Next hop), and a hop count (Num hops). At this time, the destination of the routing table records a node identifier indicating the source of the route request packet, the next hop records a node identifier indicating the node at the next stage on the route to the destination, and the hop count records the number of hops to the destination.

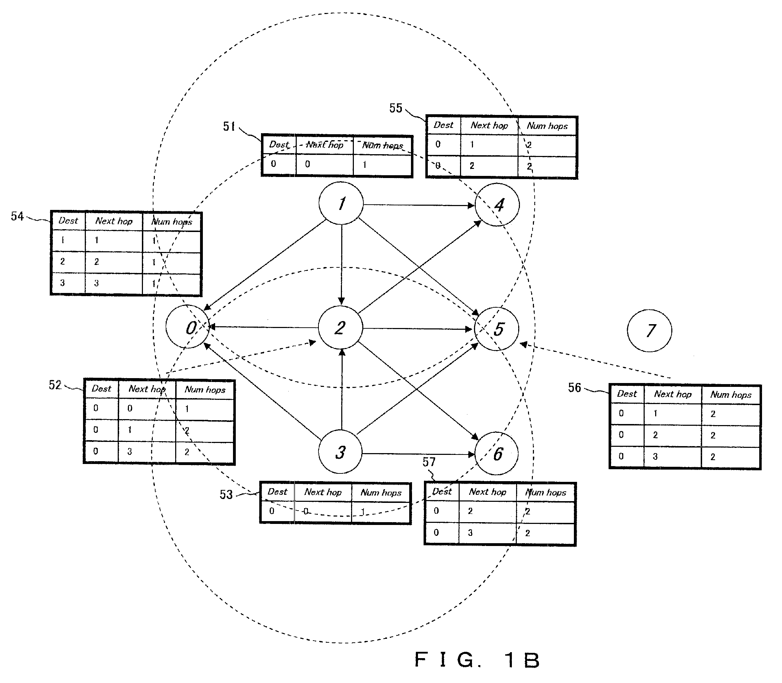

As shown in FIG. 1B, the node 1 transmits a route request packet to the adjacent nodes 0, 2, 4, and 5. Similarly, the node 2 transmits a route request packet to the adjacent nodes 0, 4, 5, and 6, and the node 3 transmits a route request packet to the adjacent nodes 0, 2, 5, and 6. Thus, the route request packets reach the nodes 4 through 6 at the next stage. Then, the nodes 0, 4, 5, and 6 respectively generate routing tables 54 through 57, and the node 2 adds two entries to the routing table 52.

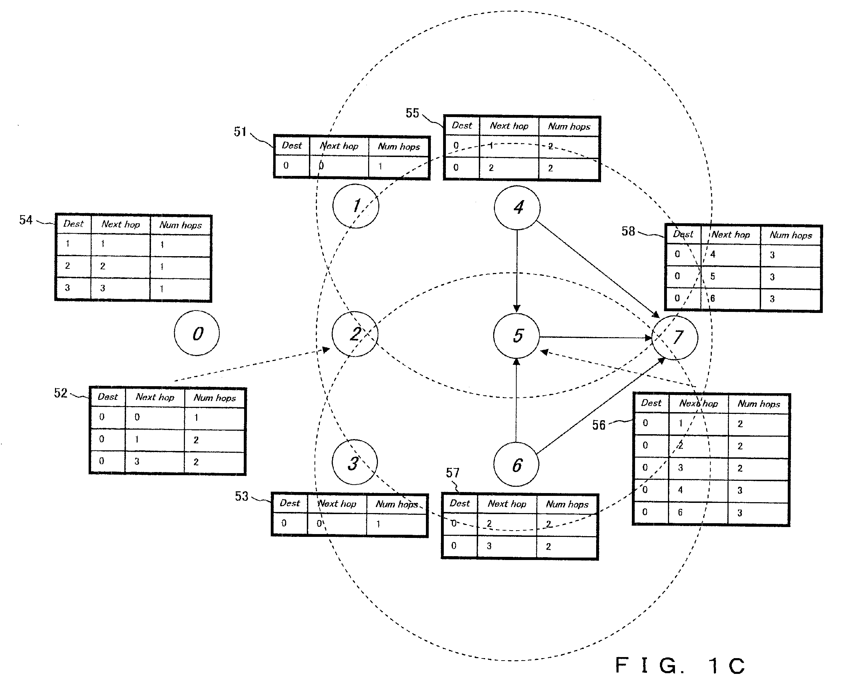

Next, as shown in FIG. 1C, the node 4 transmits a route request packet to the adjacent nodes 5 and 7, the node 5 transmits a route request packet to the adjacent node 7, the node 6 transmits a route request packet to the adjacent nodes 5 and 7. Thus, the route request packet reaches the destination node 7. At this time, the node 7 generates a routing table 58, and the node 5 adds two entries to the routing table 56.

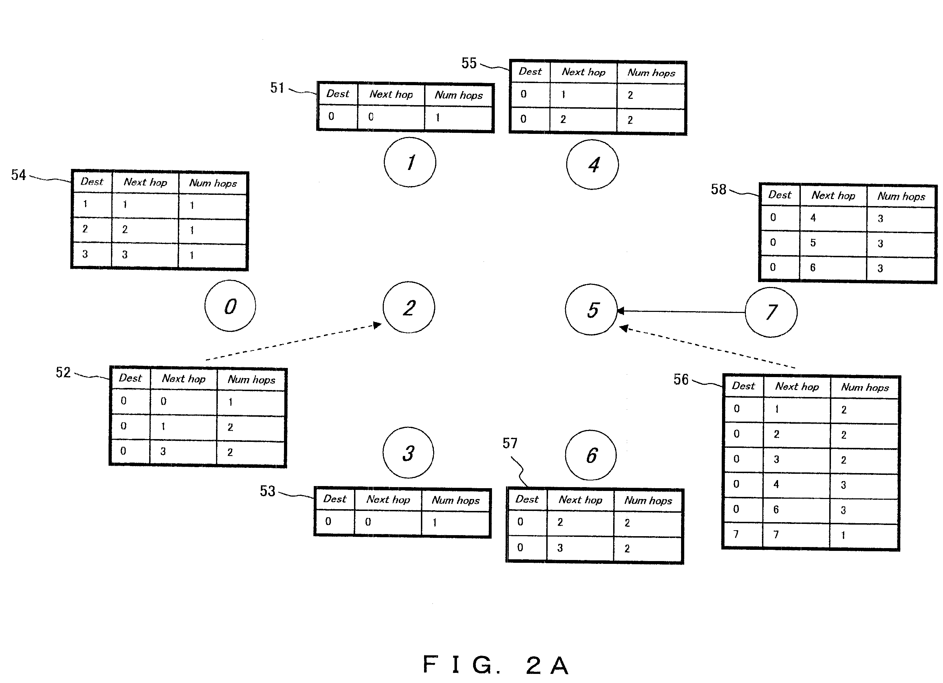

FIGS. 2A through 2D show examples of a reply process from the destination node 7. First, as shown in FIG. 2A, the destination node 7 transmits a route reply packet to the node 5, and the node 5 adds an entry to the routing table 56. At this time, the destinations of the added entries record the node identifiers indicating the sources of the route reply packet.

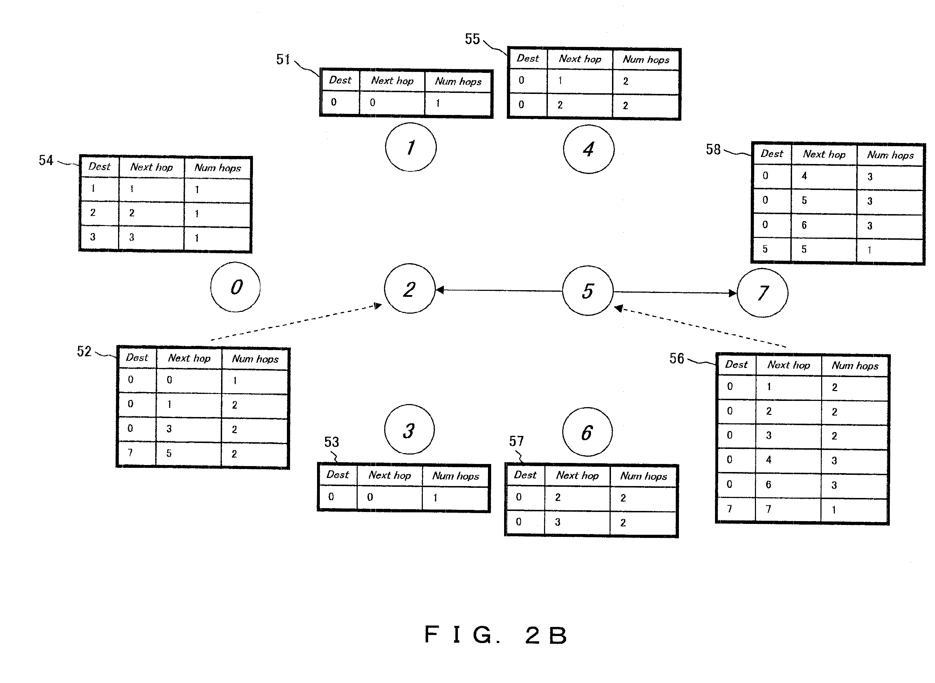

Next, as shown in FIG. 2B, the node 5 transmits a route reply packet to the nodes 2 and 7. At this time, the nodes 2 and 7 adds an entry to the routing tables 52 and 58, respectively.

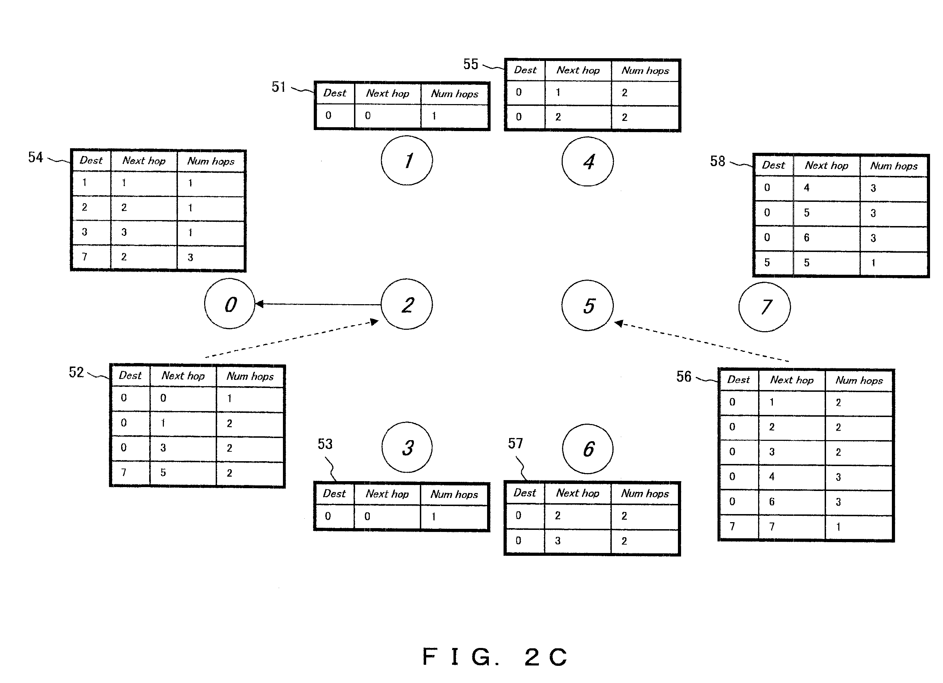

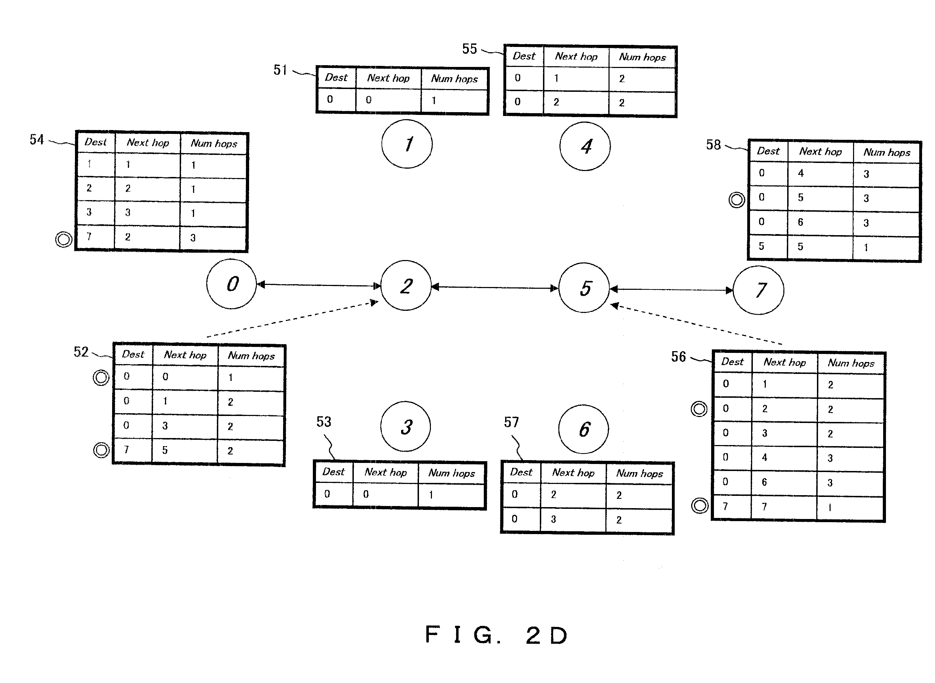

Next, as shown in FIG. 2C, the node 2 transmits a route reply packet to the node 0. At this time, the node 0 adds an entry to the routing table 54. Thus, as shown in FIG. 2D, a route is established from the node 0 to the node 7 through the nodes 2 and 5, and each node forwards a packet with reference to the entry marked with the double circle symbol in the routing table.

Without trouble such as a transfer of a node, an exhausted battery, etc., communications can be performed through the route. However, if the communications are interrupted by an occurrence of trouble, the communication connection is once interrupted, and the procedure from the flooding to reply is performed again, thereby re-establishing the route.

With the current specification of the AGDV, when a node becomes disabled for communication, a local route repair is performed. When a retry-out occurs based on the number of retries in a MAC (media access control) layer, an AODV request is locally issued within the area downstream the communication-disabled node, thereby re-establishing a route.

When the flooding process is performed on an AODV request, all paths through communication-enabled nodes existing intermediately are stored in each routing table. Then, if a node becomes communication-disabled due to a transfer of the node to a remote point or an exhausted battery during communications, a route bypassing the node can be established by locally changing the entry of a routing table without an end-to-end notification.

That is, at a stage before entering a route disconnection, the entry of a routing table is changed in advance, thereby continuing the communication without the upper protocol performing a retry.

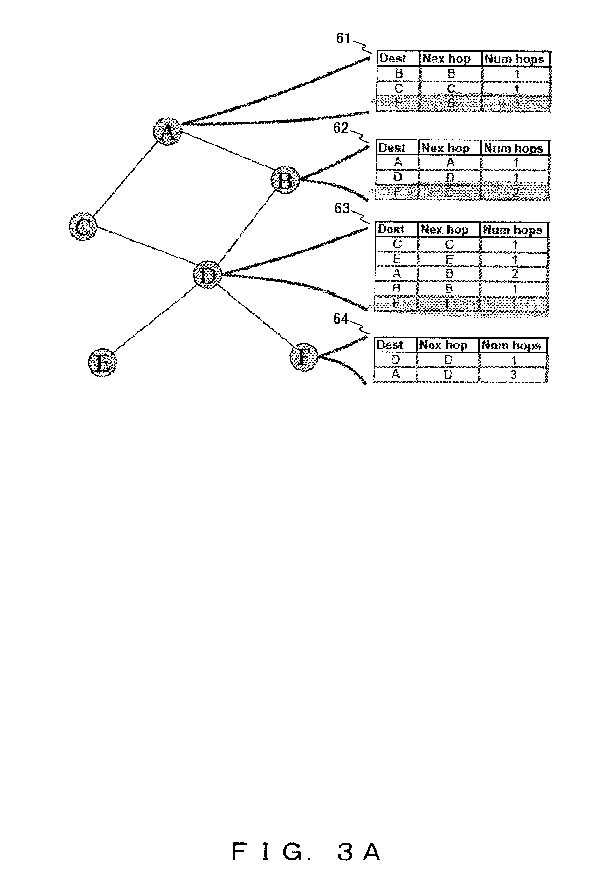

FIG. 3A shows an example of an ad hoc network for performing the above-mentioned local route repair. The ad hoc network is configured by the nodes A through F, and the nodes A, B, D, and F respectively hold routing tables 61 through 64.

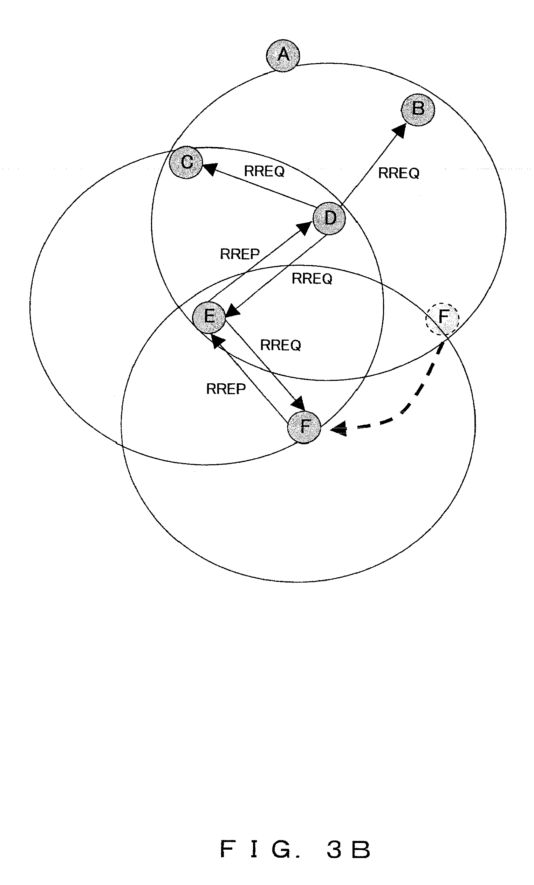

Thus, as shown in FIG. 3B, when the link between the nodes D and F is disconnected by a transfer of the node F, the node D detects a link fault, and transmits a route request packet (RREQ) to the adjacent nodes B, C, and E. Next, the node E transmits a route request packet to the transferred node F. Then, a route reply packet (RREP) is transmitted from the node F to the node E, and the node E transmits a route reply packet to the node D.

The following patent document 1 relates to route switching in a wireless ad hoc communication system, the patent document 2 relates to a route change in a multi-hop wireless network.

Patent Document 1: Japanese Published Patent Application No. 2004-282270

Patent Document 2: Japanese Published Patent Application No. 2005-223697

Non-patent document 1: "RFC3561: Ad hoc On-Demand Distance Vector (AODV) Routing", [online], [retrieved on Jan. 9, 2007], Internet <URL: http:www.intf.org/rfc/rfc3561.txt>

In the above-mentioned conventional AODV protocol, when a route is searched for, all paths are tracked in the flooding process, and the method of tracking only one route in the reply process is an effective solution for simplifying an architecture. However, if a local route repair process is performed after any fault occurs in a route, there is the problem that an end-to-end communication is once interrupted.

### Summary of the Invention

It is desirable to establish a route again without an interrupt of an end-to-end communication when a fault occurs in an ad hoc network.

The route control apparatus according to an embodiment of the present invention is provided for one of a plurality of nodes of an ad hoc network, and includes a storage device, a request transmission device, a reply transmission device, and a control device.

The storage device stores route information about the ad hoc network. The request transmission device transmits a request to a plurality of adjacent nodes in a forward flooding process from a source node to a destination node when a route is searched for from the source node to the destination node in a plurality of nodes.

The reply transmission device transmits a reply to a plurality of adjacent nodes in an inverse flooding process from the destination node to the source node when the reply is transmitted from the destination node to the source node. The control device registers information about a route including an adjacent node in the storage device upon receipt of a request or reply from the adjacent node.

### Brief Description of the Drawings

FIG. 1A shows a conventional flooding process (1);
FIG. 1B shows a conventional flooding process (2);
FIG. 1C shows a conventional flooding process (3);
FIG. 2A shows a conventional reply process (1);
FIG. 2B shows a conventional reply process (2);
FIG. 2C shows a conventional reply process (3);
FIG. 2D shows a conventional reply process (4);
FIG. 3A shows a conventional ad hoc network;
FIG. 3B shows a conventional local route repair;
FIG. 4 shows the principle of the route control apparatus according to the present invention;
FIG. 5A shows a reply process (1) according to the present invention;
FIG. 5B shows a reply process (2) according to the present invention;
FIG. 5C shows a reply process (3) according to the present invention;
FIG. 5D shows a reply process (4) according to the present invention;
FIG. 6 is a flowchart of the reply process;
FIG. 7 shows a sequence number;
FIG. 8 shows a sequence number after the reply process;
FIG. 9 is a flowchart of the main route determining process;
FIG. 10 shows an alternative route;
FIG. 11 is a flowchart of the route switching process;
FIG. 12 shows an alternative route form instruction;
FIG. 13 shows the first ad hoc network system;
FIG. 14 shows an alternative route after a cutoff obstacle appears;
FIG. 15 shows the second ad hoc network system;
FIG. 16 shows an alternative route after a transfer of a terminal;
FIG. 17 shows a main route and an alternative route; and
FIG. 18 shows node sequence information.

### Description of the Preferred Embodiments

The best mode for embodying the present invention is described below in detail with reference to the attached drawings.

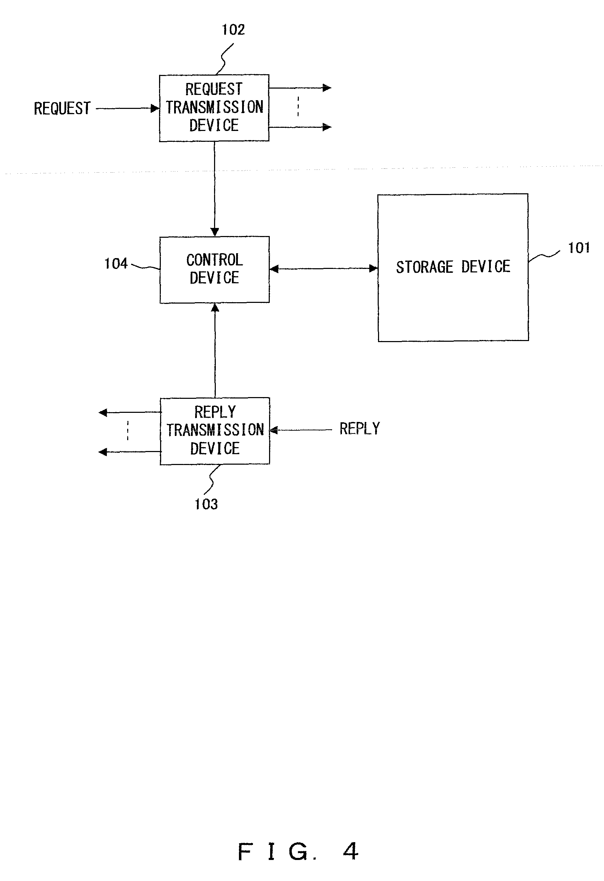

FIG. 4 shows the principle of the route control apparatus according to the present invention. The route control apparatus shown in FIG. 4 is provided for one of a plurality of nodes forming an ad hoc network, and includes a storage device 101, a request transmission device 102, a reply transmission device 103, and a control device 104.

The storage device 101 stores route information about an ad hoc network. The request transmission device 102 transmits a request to a plurality of adjacent nodes in a forward flooding process from a source node to a destination node when a route is searched for from the source node to the destination node in a plurality of nodes.

The reply transmission device 103 transmits a reply to a plurality of adjacent nodes in an inverse flooding process from the destination node to the source node when the reply is returned from the destination node to the source node. When the control device 104 receives a request or a reply from an adjacent node, it registers route information including the adjacent node in the storage device 101.

If the route control apparatus is provided for each node, the route information about a plurality of routes in both directions between the source node and the destination node can be registered in each node at the stage before starting communications. Thus, not only a main route, but also one or more alternative routes are automatically set in the ad hoc network, and switching to an alternative route can be immediately performed when the communication status of the main route is degraded.

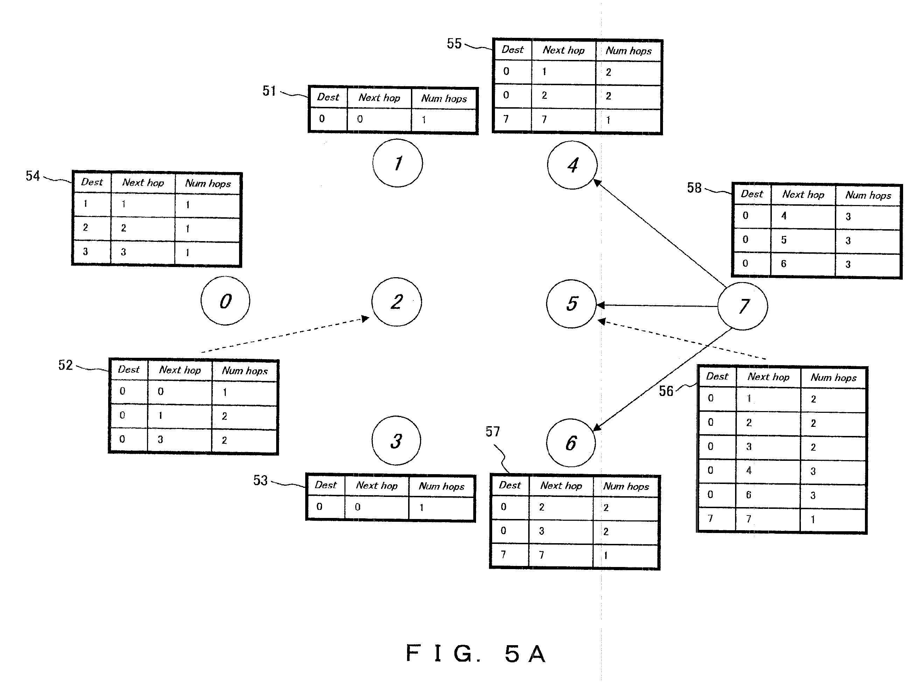

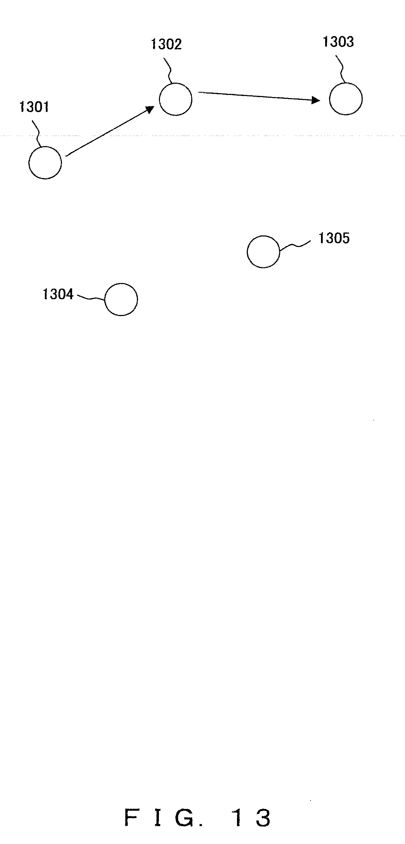

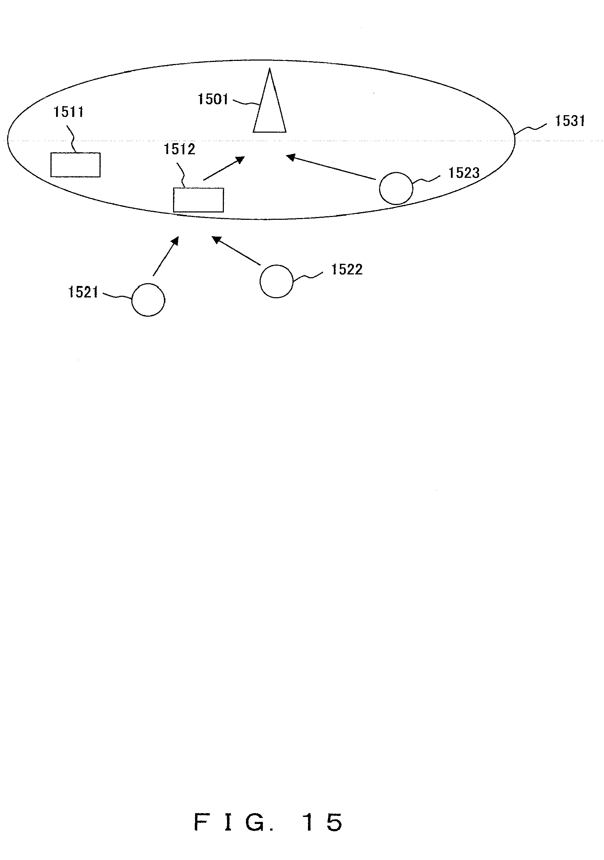

The route control apparatus shown in FIG. 4 corresponds to one of the nodes 0 through 7 shown in FIG. 5A and described later, terminals 1301 through 1305 shown in FIG. 13, and a base station 1501, mobile relay devices 1511 and 1512, terminals 1521 through 1523 shown in FIG. 15. The route information stored in the storage device 101 corresponds to one of the routing tables 51 through 58 shown in FIG. 5A.

According to the present invention, for example, a node located upstream of the node in which a fault has occurred can establish an alternative route at its own discretion at a stage before a retry-out of the MAC layer. Thus, a disconnection of a communication connection can be avoided, and the maximum communication route use efficiency can be attained with the minimum number of communication packets and the minimum power consumption.

In the present mode for embodying the present invention, when a route is searched for from a source to a destination in an ad hoc network, an inverse flooding process of a route reply is performed in addition to a forward flooding process of a route request. Thus, all communication-enabled paths in both directions can be stored in the routing table at a stage before starting communications.

For example, in the network shown in FIG. 1A, the forward flooding process of a route request packet is performed in the same procedure as shown in FIGS. 1A through 1C. Then, after the route request packet reaches the destination node 7, the inverse flooding process of a route reply packet is performed as in the forward flooding process.

FIGS. 5A through 5D show examples of the reply process. First, as shown in FIG. 5A, the destination node 7 transmits a route reply packet to the adjacent nodes 4 and 5 with the source node 0 set as a destination. At this time, the nodes 4 and 5 add an entry to each of the routing tables 55 through 57.

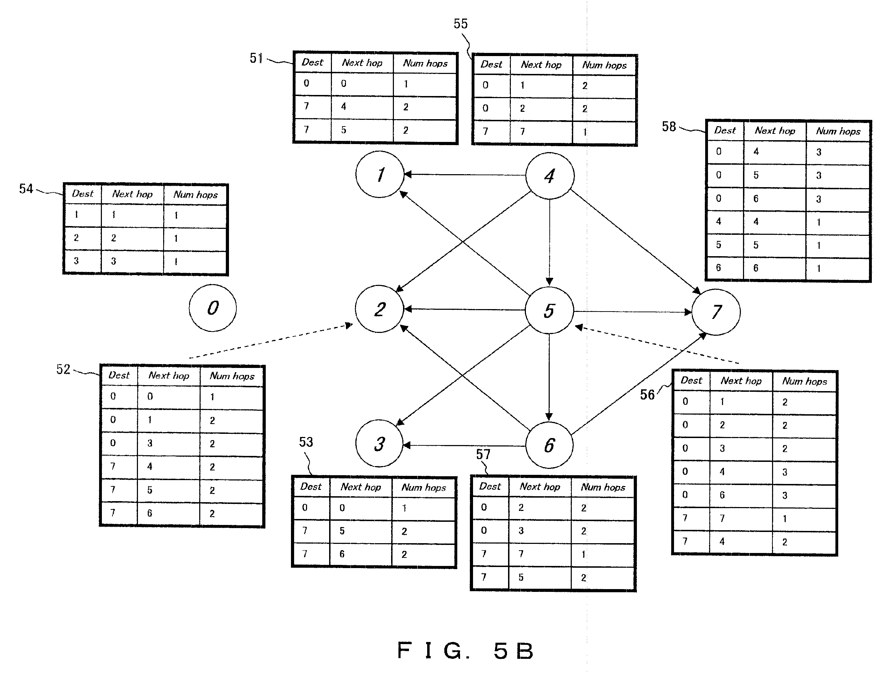

Next, as shown in FIG. 5B, the node 4 transmits a route reply packet to the adjacent nodes 1, 2, 5, and 7. Similarly, the node 5 transmits a route reply packet to the adjacent nodes 1, 2, 3, 6, and 7, and the node 6 transmits a route reply packet to the adjacent nodes 2, 3, and 7. Thus, the route reply packets reach the nodes 1 through 3 at the next stage.

At this time, the nodes 1 and 3 add two entries to the routing tables 51 and 53, the nodes 5 and 6 add one entry to the routing tables 56 and 57, and the node 7 adds three entries to the routing table 58.

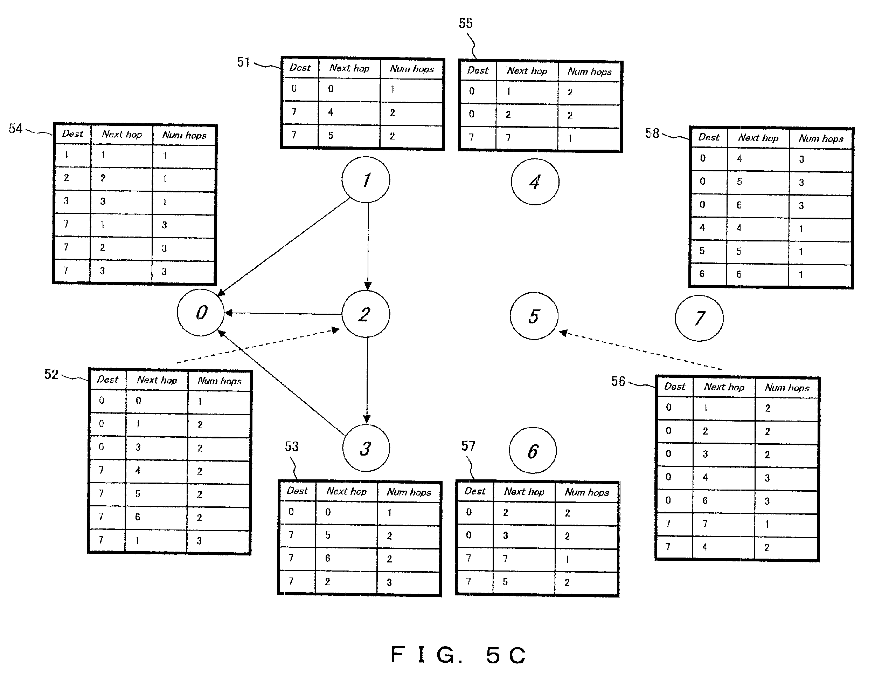

As shown in FIG. 5C, the node 1 transmits a route reply packet to the adjacent nodes 0 and 2. Similarly, the node 2 transmits a route reply packet to the adjacent nodes 0 and 3, and the node 3 transmits a route reply packet to the adjacent node 0. Thus, the route reply packets reach the adjacent node 0. At this time, the nodes 2 and 3 add one entry to the routing tables 52 and 53, and the node 0 adds three entries to the routing table 54.

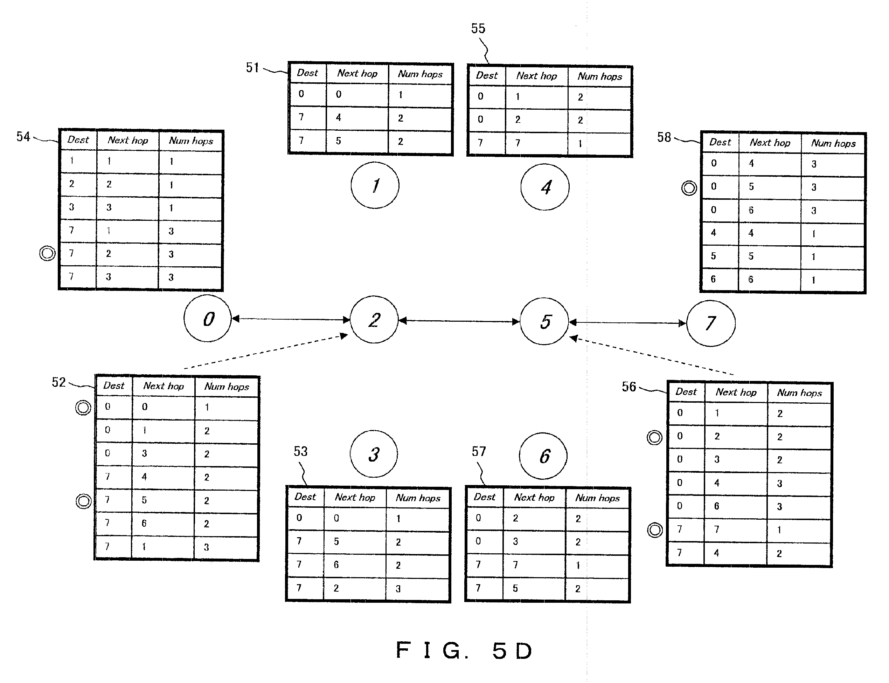

As shown in FIG. 5D, the most preferable route in all routes recorded in the routing tables is determined as a main route. In this example, the route from the node 0 to the node 7 through the nodes 2 and 5 is determined as a main route, and each node transmits a packet with reference to the entry indicated by the double circle symbol in the routing table.

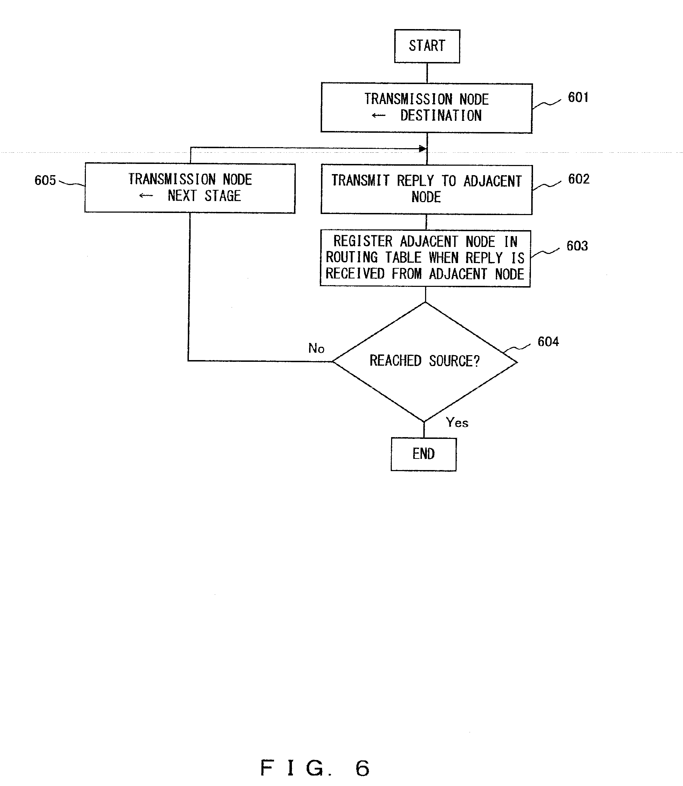

FIG. 6 is a flowchart of the reply process. First, the destination node is a transmission node (step 601), and the transmission node transmits a route reply packet to a plurality of adjacent nodes (step 602). Then, each node receives the route reply packet from the adjacent transmission node, and adds an entry to the routing table (step 603).

At this time, the destination of the added entry records a node identifier indicating the source of the route reply packet, the next hop records the node identifier indicating the transmission node, and the hop count records the number of hops to the destination.

Next, it is checked whether or not the node that has received the route reply packet is a source of the route request packet (step 604). If the receiving node is not the source, the receiving node becomes a new transmission node (step 605), and the processes in and after step 602 are repeated. When the source node receives the route reply packet, the process terminates. Thus, all communication-enabled paths including the alternative routes in both directions are stored in the routing tables of the respective nodes.

After the reply process, amain route as the most preferable route is determined with the sequence number etc. taken into account. The sequence number functions as a time stamp, and each node determines by referring to the sequence number whether or not the information of the routing table is the latest information. Each node increases the sequence number of the node each time it transmits a message, and records a sequence number of another node when it receives a message. A larger sequence number refers to a newer route. Thus, it is known which node stores correct information.

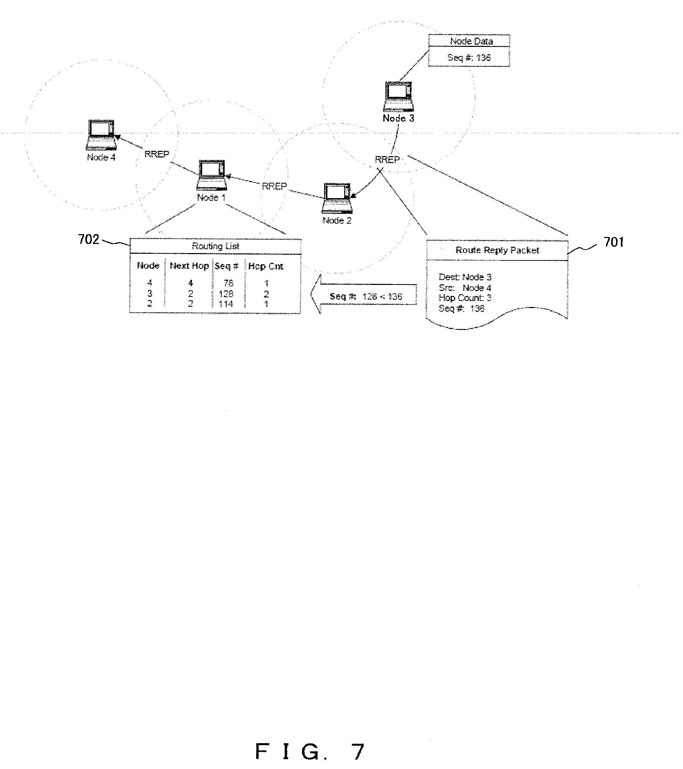

For example, In the ad hoc network shown in FIG. 7, when the node 1 forwards the route reply packet from the node 3 to the node 4, the node 1 compares the sequence number of a route reply packet 701 with the sequence number recorded in a routing table 702.

In this case, the sequence number of the route reply packet 701 is "136", and the sequence number of the entry of the destination node 3 of the routing table 702 is "128". Therefore, it is known that the route reply packet 701 has a newer route than the entry, and the node 1 records the information of the route reply packet 701 in the routing table 702.

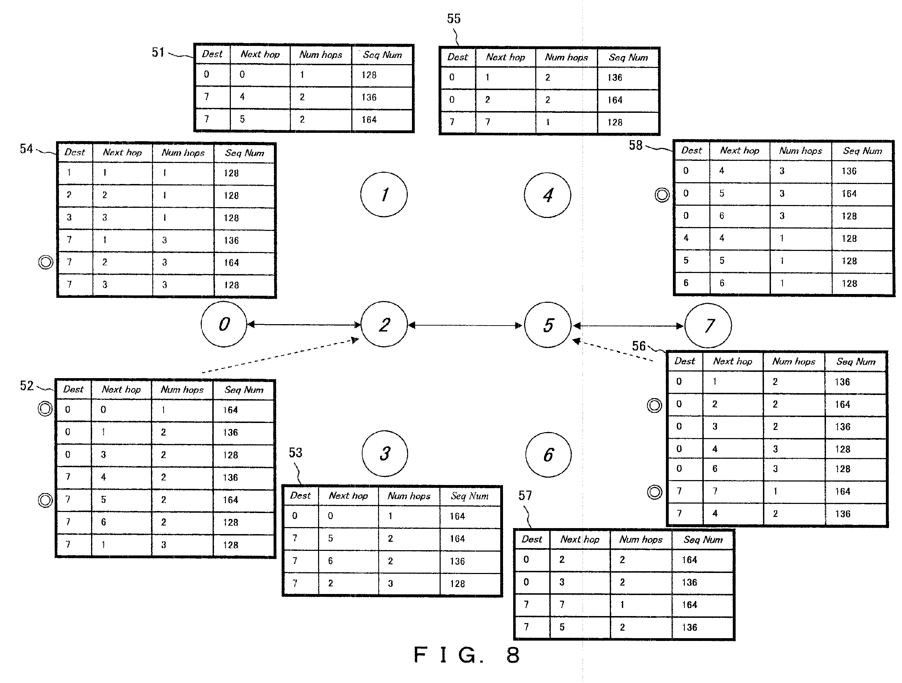

As shown in FIG. 8, a sequence number is added to the routing tables 51 through 58 shown in FIG. 5D. The sequence number "136" indicates newer information than the sequence number "128", and the sequence number "164" indicates newer information than the sequence number "136".

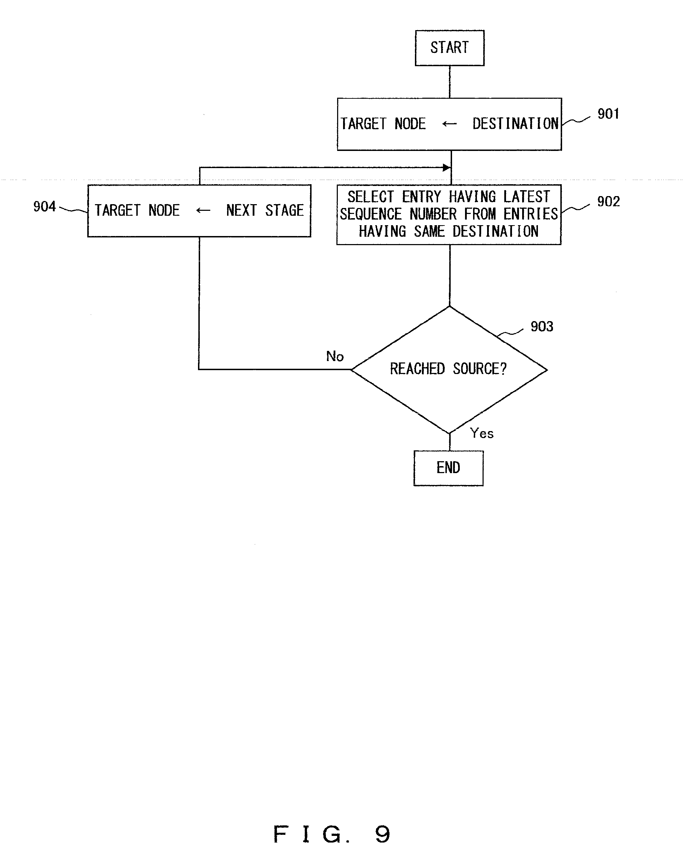

FIG. 9 is a flowchart of the main route determining process using the sequence numbers. First, the destination node is a target node (step 901), and the target node selects an entry having the latest sequence number in the entries having the same destination registered in the routing table (step 902). Then, the entry is specified as a reference entry (marked with the double circle symbol) for use in the main route.

Next, it is checked whether or not the target node is the source of the route request packet (step 903). If the target node is not the source, it becomes a new target node at the next stage (step 904), and the processes in and after step 902 are repeated. If the source node is a target node, the process terminates.

After the communication using the main route is started, and when the communication status is degraded and a retry is performed in the MAC layer, a retry-out is determined in the conventional technology if eight retries fail.

On the other hand, in the present mode for embodying the present invention, when retries of a smaller number (for example, four) than a retry count fail, a switching process to an alternative route recorded in the routing table in advance is started. Inthisprocess, the information about a physical layer such as reception power is not referred to, and a route is switched by retransmission at a protocol level.

For example, when a fault occurs at the node 5 on the main route, the node 7 performs a retry a predetermined number of times in the MAC layer for the node 5. If the packet cannot still reach, the node 7 instructs the node 4 to reserve a route to the node 2.

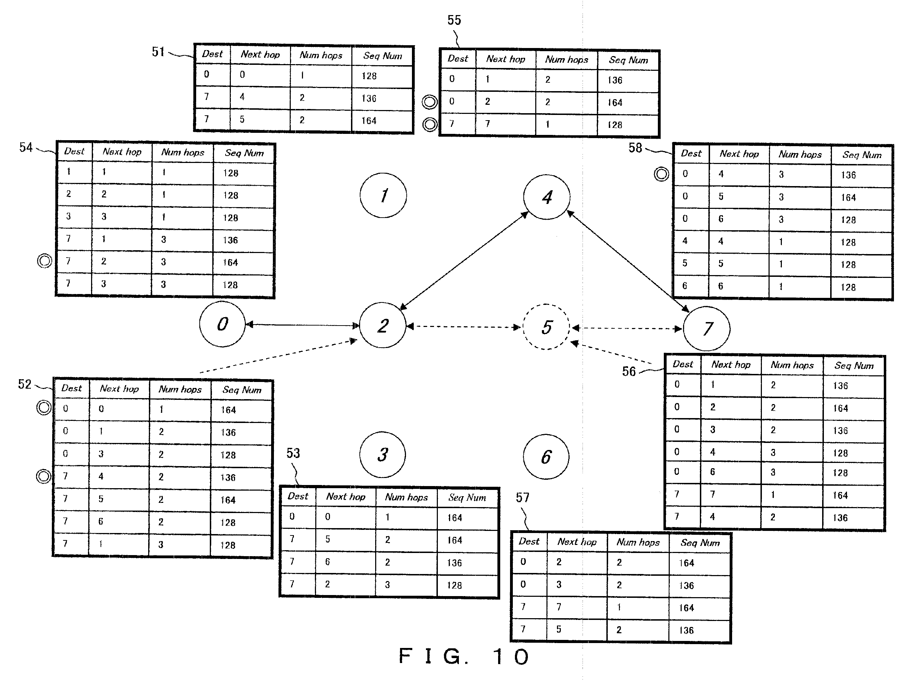

Practically, as shown in FIG. 10, an entry having the destination of 0 and the hop of 2 is selected from the routing table in the node 4. Thus, the route of node 2 - node 4 - node 7 is established as an alternative route of node 2 - node 5 - node 7.

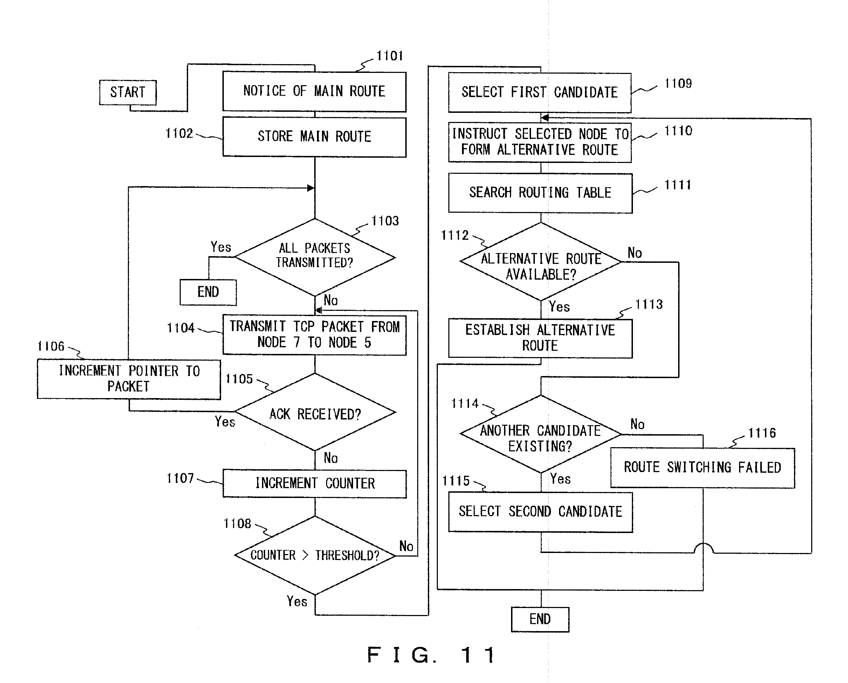

FIG. 11 is a flowchart of the route switching process. After the main route is determined, a packet including the sequence of nodes "0, 2, 5, and 7" forming the main route is transmitted from the source node 0 to the destination node 7 (step 1101).

The node 7 that has received the packet stores the information that the next node on the main route is the node 5, and the next node of the node 5 is the node 2 (step 1102). Then, the node 7 checks whether or not all TCP (transmission control protocol) packets required in the communication between the node 0 and the node 7 have been transmitted to the node 5 (step 1103).

If there is a TCP packet not transmitted yet, the node 7 transmits the next TCP packet to the node 5 (step 1104), and checks whether or not an acknowledgment (ACK) has been returned from the node 5 (step (step 1105). If the ACK is received from the node 5, then the pointer to the TCP packet is incremented, the processes in and after step 1103 are repeated, and all TCP packets are transmitted, thereby terminating the process.

Unless an ACK is received from the node 5 in step 1105, the retry frequency counter is set to 1 (step 1107), and the counter is compared with the threshold (step 1108). The threshold can be a value (for example, 4) smaller than the retry-out threshold.

If the value of the counter is equal to or lower than the threshold, the processes in and after step 1104 are repeated, and unless the ACK is received again, the counter is incremented (step 1107). If the value of the counter exceeds the threshold in step 1108, the node 7 selects the first candidate for the alternative route from the routing table 58 (step 1109). At this time, among the entries stored with the node 0 set as a destination in the routing table 58, the entry having the second latest sequence number is selected as the first candidate (node 2 - node 4 - node 7).

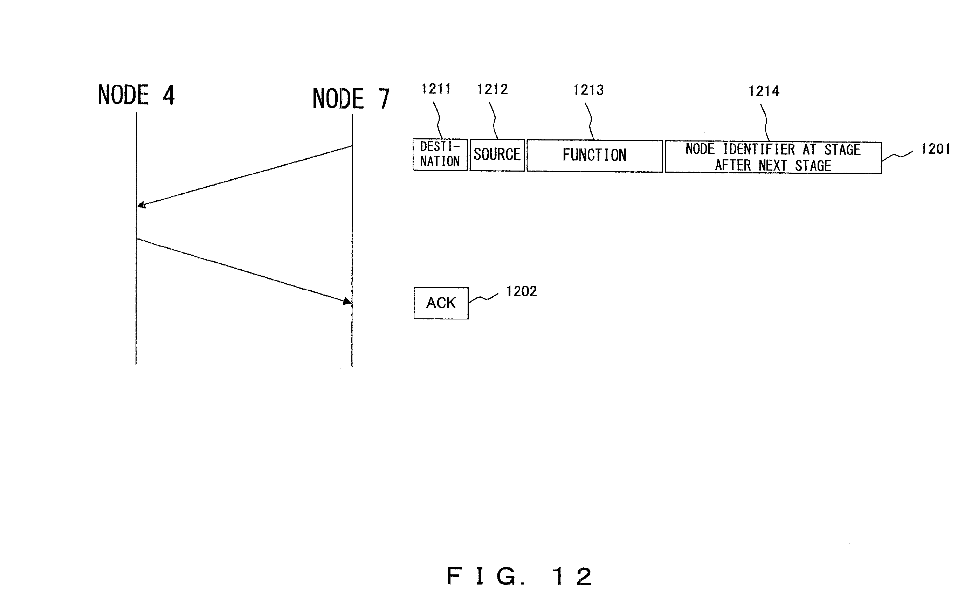

Next, the node 4 as an ingress node of the selected alternative route is instructed to form an alternative route (step 1110). At this time, as shown in FIG. 12, the node 7 transmits a packet 1201 as an instruction to form an alternative route to the alternative node 4 capable of reaching the node 2 at the next stage of the node 5 in which a fault has occurred, and receives an ACK 1202 from the node 4. The identifier of the node 7 is described in a destination 1211 of the packet 1201, and the identifier of the node 0 is described in a source 1212. Switching of a path is described in a function 1213, and the identifier of the node 2 is described in a node identifier at the stage after the next stage 1214.

Next, the node 4 searches the routing table 55 using the source 1212 and the node identifier at the stage after the next stage 1214 as keys (step 1111), and checks whether or not there is a corresponding entry (step 1112). If there is an entry corresponding to the routing table 55, the nodes 2, 4, and 7 establish the first candidate for an alternative route (step 1113), thereby terminating the process. Thus, the reference entries in the routing tables 52, 55, and 58 are changed.

If there is no corresponding entry in step 1112, the node 7 checks whether or not there is another candidate for an alternative route (step 1114). If there is another candidate, the second candidate is selected (step 1115), thereby repeating the processes in and after step 1110. At this time, an entry having the third latest sequence number in the entries having the node 0 as the destination in the routing table 58 is selected as the second candidate (node 2 - node 6 - node 7).

Unless there is another candidate in step 1114, it is determined that switching of a route has failed (step 1116), thereby terminating the process.

Thus, according to the present mode for embodying the present invention, a route can be timely switched by collecting the alternative route information after performing the inverse flooding process before starting the communication. On the other hand, in the conventional method of acquiring the alternative route information after starting the communication, an alternative route is searched for after detecting the retransmission of a packet. Therefore, there can be the possibility that the disconnection of a TCP connection occurs.

If the number of packets to be used when a route is established again in the ad hoc network shown in FIG. 10 is estimated with the number of times of establishing an alternative route set to n, then 23 x n packets are used in the conventional method while only n packets are used in the present mode for embodying the present invention. Although further 20 packets are used in the inverse flooding process in the present mode for embodying the present invention, only a total of 20 + n packets are required. Therefore, an alternative route can be established with a smaller number of packets than in the conventional method.

When a fault occurs in the node other than the node 5 in the main route, an alternative route can be established by a node adjacent to the faulty node performing a similar route switching process, thereby establishing an alternative route.

Next, an application example of a route switching control is described below with reference to FIGS. 13 through 16.

FIG. 13 shows an example of an ad hoc network system communicating information as a lifeline without requiring an infrastructure for communication in an emergency in case of a disaster etc. The system includes the terminals 1301 through 1305, the mobility of each terminal is low, and a nomadic operation is to be performed.

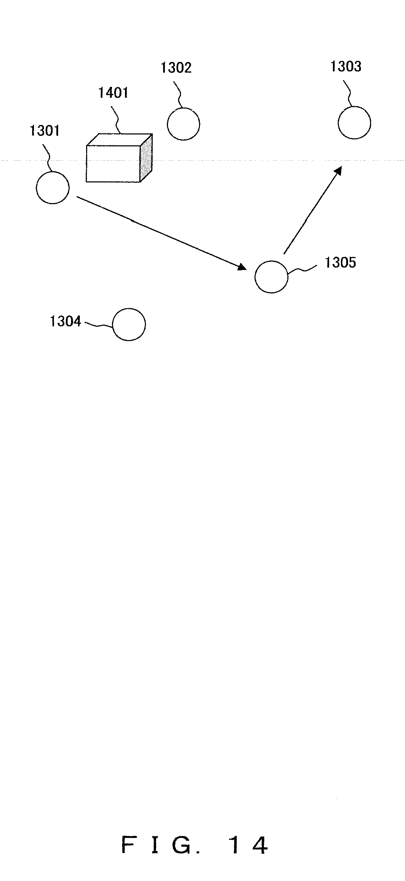

Assume that a cutoff obstacle 1401 appears as shown in FIG. 14 when a main route is formed from the terminal 1301 to the terminal 1303 through the terminal 1302 and communication is performed between the terminal 1301 and the terminal 1303. In this case, the retry-out of the TCP connection easily occurs between the terminal 1301 and the terminal 1302. However, by switching in advance the main route to an alternative route through the terminal 1305, the time required to recover from a disaster can be shortened.

FIG. 15 shows an example of an ad hoc network system for performing data communication for a mobile telephone. The system includes the base station 1501, mobile relay devices 1511 and 1512, and the terminals 1521 through 1523 for performing a nomadic operation. The mobile relay device 1512 relays the communication among the terminals 1521 and 1522, and the base station 1501 at the bounding portion of a cell 1531 managed by the base station 1501.

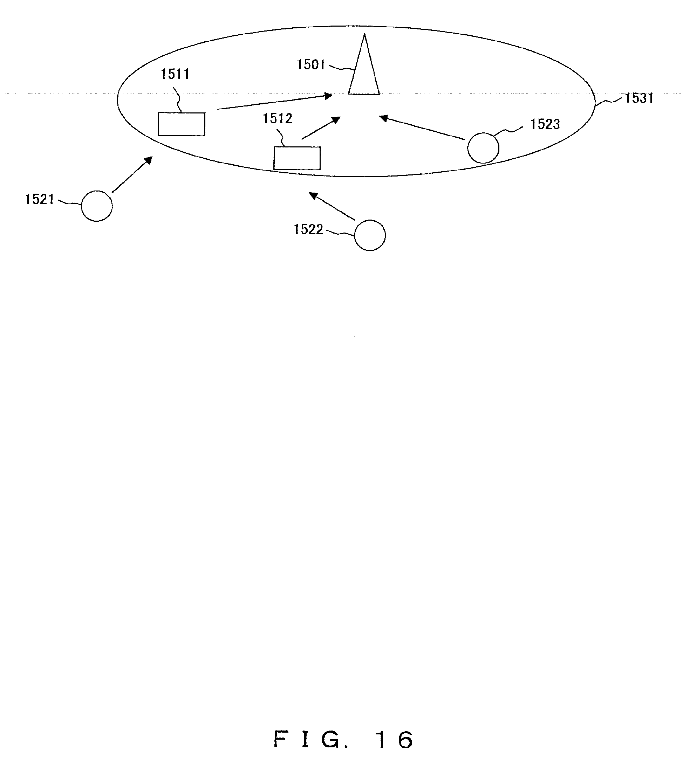

Assume that the terminal 1521 has moved as shown in FIG. 16 when a main route is formed from the terminal 1521 to the base station 1501 through the mobile relay device 1512 and communication is being performed between the terminal 1521 and the base station 1501. In this case, data communication can continue by switching the main route to an alternative route through the travel relay device 1511.

All node identifiers of the node sequence forming a main route and an alternative route can be stored in each node after the forward and inverse flooding processes are performed in the ad hoc network shown in FIG. 5D. Thus, when a fault occurs in an adjacent node, an instruction to form an alternative route can be immediately issued to an alternative node.

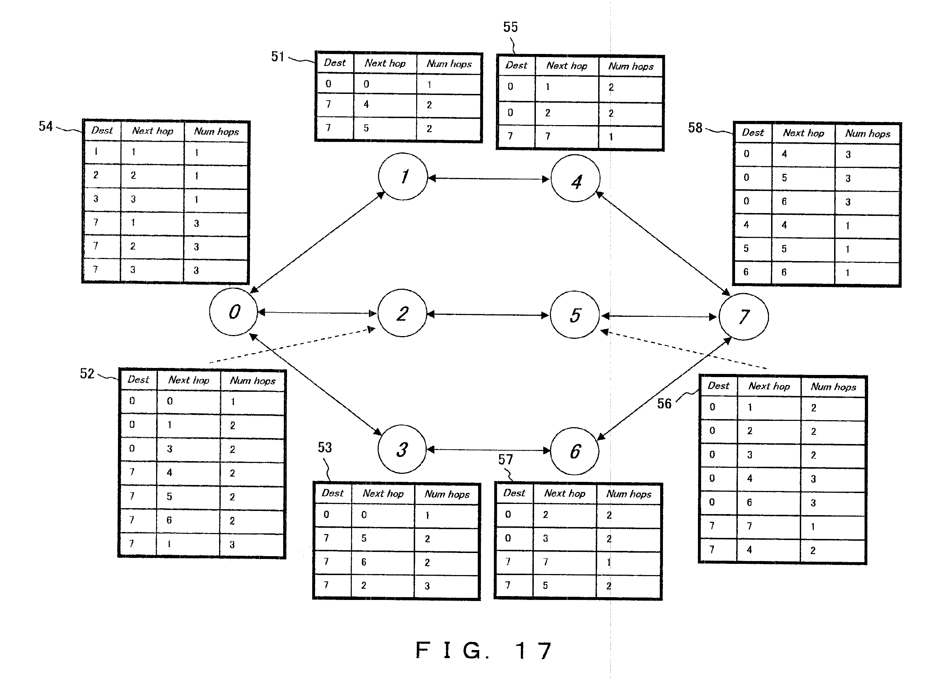

For example, as shown in FIG. 17, three types of node sequence information, that is, the main route (node 0 - node 2 - node 5 - node 7), the first alternative route (node 0 - node 1 - node 4 - node 7), and the second alternative route (node 0 - node 3 - node 6 - node 7) are generated in addition to the routing table.

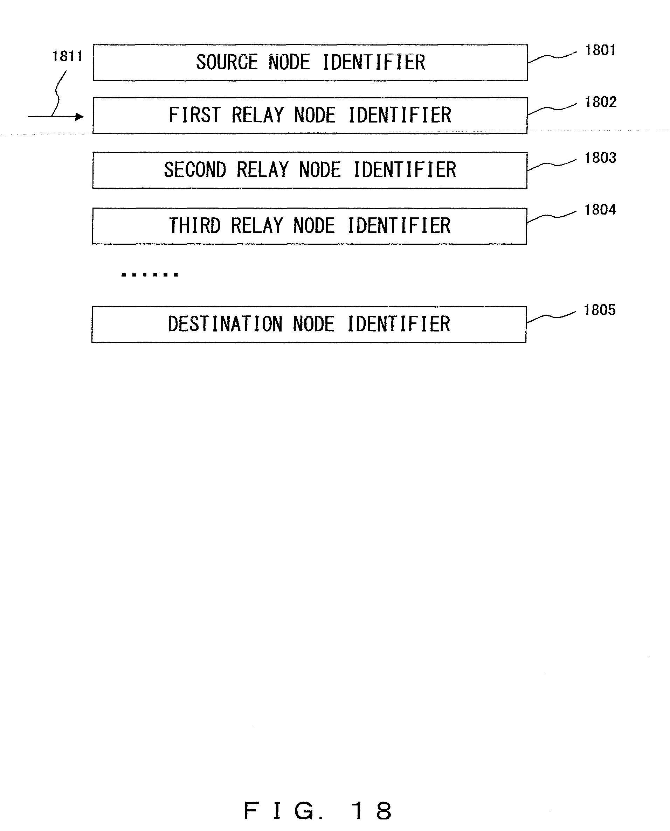

Each piece of node sequence information has the data structure as shown in FIG. 18, and includes a source node identifier 1801, a plurality of relay node identifiers 1802 through 1804, and a destination node identifier 1805. A pointer 1811 points to the position of the node storing the node sequence information. By generating the node sequence information for a plurality of routes, the entire route from the source to the destination can be switched to an alternative system.

It is also possible that only a source node and a destination node can store node sequence information instead of storing the node sequence information by all nodes forming a network.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A route control apparatus provided for one of a plurality of nodes (0 through 7, 1301 through 1305, 1501, 1511, 1512, 1521 through 1523) forming an ad hoc network, comprising:
a storage device (101) for storing route information (51 through 58) of the ad hoc network;
a request transmission device (102) for transmitting a request to a plurality of adjacent nodes in a forward flooding process from a source node (0) to a destination node (7) when a route from the source node to the destination node is searched for in the plurality of nodes;
a reply transmission device (103) for transmitting a reply to a plurality of adjacent nodes in an inverse flooding process from the destination node to the source node when the reply is transmitted from the destination node to the source node; and
a control device (104) for registering information about a route including an adjacent node in the storage device when the request or the reply is received from the adjacent node.

2. The apparatus according to claim 1, wherein
the storage device stores route information indicating a plurality of routes from the source node to the destination node, the control device refers to the route information and starts a switching process from a first route to a second route in the plurality of routes when a communication status is degraded after a communication is started using the first route.

3. The apparatus according to claim 2, wherein
the control device issues to an adjacent node (4) included in the second route an alternative route form instruction (1201) which includes node identification information indicating a node at a next stage of the adjacent node and instructs the switching process.

4. The apparatus according to claim 3, wherein
the control device starts a switching process of switching from the first route to a third route in the plurality of routes when the adjacent node included in the second route does not store route information indicating a route to the node at the next stage.

5. The apparatus according to any of claims 2 to 4, wherein
the storage device further stores node sequence information indicating a plurality of node sequences respectively corresponding to the plurality of routes.

6. A route control method in an ad hoc network formed by a plurality of nodes (0 through 7, 1301 through 1305, 1501, 1511, 1512, 1521 through 1523), comprising:
repeating a process of transmitting a request (102) to a plurality of adjacent nodes in a forward flooding process from a source node (0) to a destination node (7) when a route from the source node to the destination node is searched for in the plurality of nodes;
registering (101, 104) information (51 through 58) about a route including an adjacent node in a node that has received the request from the adjacent node;
repeating a process of transmitting a reply (103, 602) to a plurality of adjacent nodes in an inverse flooding process from the destination node to the source node when the reply is transmitted from the destination node to the source node; and
registering (101, 104, 603) information (51 through 58) about a route including an adjacent node in a node that has received the reply from the adjacent node.

7. The method according to claim 6, wherein
each node stores route information indicating a plurality of routes from the source node to the destination node, each node belonging to a first route in the plurality of routes refers to the route information when a communication status is degraded after a communication using the first route is started, and starts a switching process of switching from the first route to a second route in the plurality of routes.
